# EUROPÄISCHE PATENTSCHRIFT

(11) **EP 1 667 855 B1**
(45) Veröffentlichungstag und Bekanntmachung des Hinweises auf die Patenterteilung: **07.02.2007**
(21) Anmeldenummer: 04766590.6
(22) Anmeldetag: 25.08.2004
(51) Int. Cl.: B60C 17/00

(54) **FAHRZEUGLUFTREIFEN**
PNEUMATIC TYRE FOR A VEHICLE
PNEUMATIQUE DE VEHICULE

(30) Priorität: 20.09.2003 DE 10343599
(43) Veröffentlichungstag der Anmeldung: 14.06.2006
(73) Patentinhaber: Continental Aktiengesellschaft, 30165 Hannover (DE)
(72) Erfinder: WAGNER, Kay, 31311 Uetze (DE)
(74) Vertreter: Fornefett, Iris
(86) Internationale Anmeldenummer: PCT/EP2004/051895
(87) Internationale Veröffentlichungsnummer: WO 2005/030504

(56) Entgegenhaltungen:
- EP-A- 0 542 252
- DE-A- 19 722 521
- US-A- 4 287 924

## Beschreibung

Die Erfindung betrifft einen Fahrzeugluftreifen in radialer Bauart mit einem profilierten Laufstreifen, einem mehrlagigen Gürtelverband, einer Innenschicht, einer zumindest einlagig ausgeführten Karkasse, welche um Wulstkerne in Wulstbereichen geführt ist, Seitenwänden und mit zumindest je einem im Bereich jeder Seitenwand eingebrachten, im Querschnitt mondsichelförmigen Verstärkungsprofil, welches sich jeweils zumindest über einen Großteil der Seitenwandlänge erstreckt und aus elastomeren Materialen verschiedener Härten besteht.

Derartige, im Pannenfall selbsttragende Fahrzeugluftreifen sind in unterschiedlichen Ausführungen schon seit längerem bekannt. Die im Bereich der Seitenwände des Reifens-eingebauten Verstärkungsprofile werden bezüglich ihrer Querschnittsform und bezüglich diverser Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbsttragend zu herhalten, sodass eine Weiterfahrt möglich ist. In der EP-A 0 542 252 ist ein gattungsgemäßer Reifen offenbart. Ein selbsttragender Reifen der eingangs genannten Art ist beispielsweise aus der DE-A-29 43 654 bekannt. Der Reifen ist im Bereich seiner Seitenwände jeweils mit einem ein- oder mehrteiligen, etwa mondsichelförmigen Verstärkungsprofil versehen, welches zwischen der Innenschicht und der Karkasslage angeordnet ist und bis unterhalb des Gürtels und bis in die Nähe der Wulstbereiche verläuft. Aus der WO-A-01/43995 ist ein selbsttragender Reifen bekannt, bei dem jede Seitenwand mit einem Verstärkungsprofil versehen ist, welches über seinen Querschnitt aus Lagen aus einem flexiblerem Material und einem steiferen Material besteht. Jedes Verstärkungsprofil ist daher aus einer Vielzahl von im Wesentlichen in Reifenquerrichtung orientierten Schichten zusammengesetzt. Das US-Patent Nr. 4,287,924 zeigt eine Ausführung eines selbsttragenden Reifens, bei dem pro Seitenwand zwei mondsicheiförmig ausgeführte Verstärkungsprofile vorgesehen sind, die jeweils zwischen der Innenschicht und der Karkasslage eingebracht sind, wobei das an die Karkasslage anschließende Verstärkungsprofil aus einem flexibleren, weicheren Elastomermaterial besteht als jenes, welches an dieses und an die Innenschicht des Reifens angrenzt. Andere Ausführungsformen eines selbsttragenden Reifens zeigt das US-Patent 5,526,862. Hier bedeckt das im Bereich jeder Seitenwand zwischen der luftdichten Innenschicht und der Karkasse eingefügte Verstärkungsprofil einseitig einen im Bereich der dicksten Stelle des Verstärkungsprofils eingebrachten elastomeren Kern, dessen andere Seite an die Innenschicht des Reifens anschließt. Der Elastizitätmodul des elastomeren Materials des Verstärkungsprofils ist niedriger als jener des Kernes. Damit soll es möglich sein, das Verstärkungsprofil aus einem vergleichsweise weichem Material anzufertigen, um den Fahrtkomfort des Reifens unter normalen Fahrbedingungen zu verbessern.

Verstärkungsprofile oder Teile von Verstärkungsprofile, die aus einer eher harten Mischung bestehen, sind dazu erforderlich, die Selbsttragefähigkeit des Reifens im Pannenlauf sicherzustellen und werden daher bei den bekannten Konstruktionen entsprechend massiv ausgeführt. Dies führt dazu, dass es während eines Pannenlaufes, vor allem bei seitlich wirkenden Kräften, zu einem Einknicken oder Brechen der aus einer harten Mischung bestehenden Verstärkungsprofile oder Verstärkungsprofilteile kommen kann.

Der Erfindung liegt daher die Aufgabe zu Grunde, diesbezüglich Abhilfe zu schaffen und ein Einknicken oder Brechen der Verstärkungsprofile zu vermeiden.

Gelöst wird die gestellte Aufgabe erfindungsgemäß dadurch, dass im Verstärkungsprofil ein im Querschnitt ebenfalls mondsichelförmiges Kernprofil aus einem gegenüber dem sonstigen Material des Verstärkungsprofils härteren Mischung eingeschlossen ist.

Erfindungsgemäß ausgeführte Verstärkungsprofile weisen daher einen harten Kern auf, der komplett von einer weicheren Mischung umgeben ist. Somit kann das Verstärkungsprofil bzw. dessen weiche Mischung die unter Belastung im Pannenfall im harten Kern auftretenden Kompressionsspannungen aufnehmen. Das von einer weicheren Mischung umhüllte harte Kernprofil wirkt wie eine progressive Feder, je stärker die Einfederung umso stärker ist der Widerstand. Die weiche Mischung schützt außerdem den harten Kern vor Rissen und bietet zudem den Vorteil, dass der Fahrkomfort des Reifens verbessert wird. Das gesamte Verstärkungsprofil kann dünner ausgeführt werden als übliche Verstärkungsprofile, was sich ebenfalls auf den Fahrkomfort günstig auswirkt.

Gemäß einer bevorzugten Ausführungsform der Erfindung weist das Kernprofil eine Querschnittform auf, die zumindest im Wesentlichen jener des Verstärkungsprofils entspricht. Das Kernprofil ist somit derart im Verstärkungsprofil eingebettet, dass die Wandstärken des Verstärkungsprofils, seitlich des Kernprofils, zumindest im Wesentlichen konstant sind.

Das Kernprofil weist bevorzugt eine Shore-A-Härte von 74 bis 82, insbesondere von 78 bis 81, auf. Die Shore-A-Härte des Verstärkungsprofils beträgt zwischen 60 und 76, insbesondere zwischen 63 und 66. Der Elastizitätsmodul des Materials des Kernprofils beträgt zwischen 8 und 12 N/mm², jener des Materials des Verstärkungsprofils zwischen 2 und 9 N/mm².

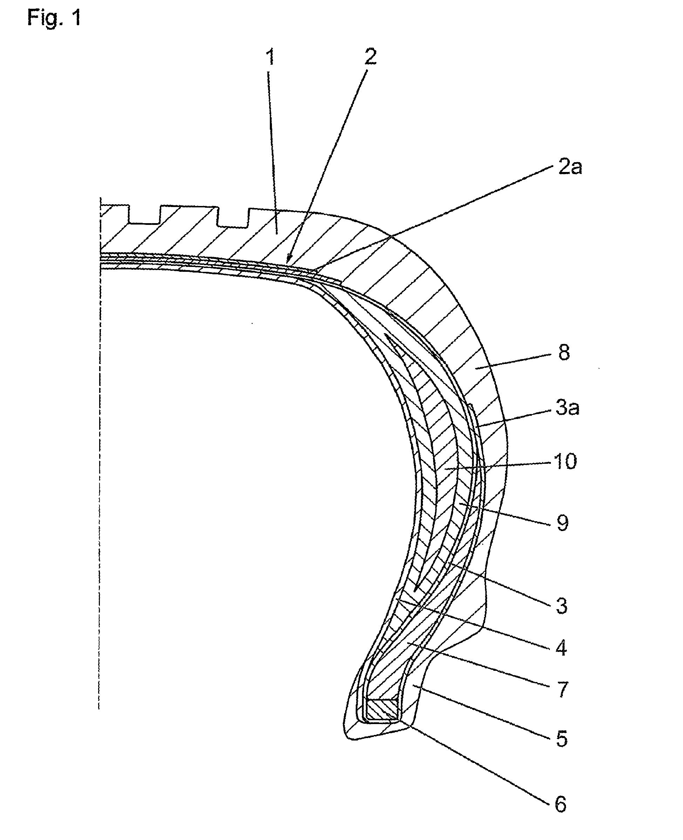

Weitere Merkmale, Vorteile und Einzelheiten der Erfindung werden anhand der Zeichnung, die schematisch ein Ausführungsbeispiel darstellt, näher beschrieben. Dabei zeigt die einzige Zeichnungsfigur, Fig. 1, einen Teilquerschnitt durch einen Radialreifen für Personenkraftwagen.

Gemäß dem in Fig. 1 gezeigten Querschnitt sind die wesentlichen Bestandteile, aus welchen sich der dargestellte Reifen zusammensetzt, ein profilierter Laufstreifen 1, ein bei der gezeigten Ausführung aus zwei Lagen 2a bestehender Gürtel 2, eine insbesondere einlagig ausgeführte Karkasse 3, eine weitgehend luftdicht ausgeführte Innenschicht 4, Wülste 5 mit Wulstkernen 6 und Wulstkemprofilen 7, sowie Seitenwände 8 und etwa mondsichelförmige Verstärkungsprofile 9. Die beiden Lagen 2a des Gürtels 2 bestehen auf insbesondere bekannte Weise aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2a orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge 3a verlaufen neben den Wulstkemprofilen 7 in Richtung Gürtel 2.

Die beiden aus elastomerem Material, insbesondere aus einer Kautschukmischung, hergestellten Verstärkungsprofile 9 sind während des Aufbaus des Reifens auf der Innenschicht 4 positioniert worden und befinden sich daher zwischen dieser und der Karkassse 3. Die Dicke der Verstärkungsprofile 9 nimmt sowohl Richtung Gürtel 2 als auch Richtung Wulst 5 ab. Richtung Gürtel 2 reicht jedes Verstärkungsprofil 9 bis unter die Randbereiche desselben. Richtung Wulst 5 endet jedes Verstärkungsprofil 9 knapp oberhalb des Wulstkemes 6. Über den überwiegenden Bereich der Länge der Seitenwand ist jedes Verstärkungsprofil 9 nahezu konstant dick ausgeführt, seine Stärke beträgt hier bis zu 13 mm, insbesondere 9 bis 11 mm.

Jedes Verstärkungsprofil 9 enthält ein im Querschnitt ebenfalls mondsichelförmiges elastomeres Kernprofil 10. Die Querschnittsform des Kernprofils 10 entspricht bei der dargestellten Ausführungsform zumindest im Wesentlichen der Querschnittsform jedes Verstärkungsprofils 9. Das Kernprofil 10 erstreckt sich im Inneren des Verstärkungsprofils 9 im mittleren Bereich über mindestens 30 %, insbesondere bis zu 70 % der Erstreckung desselben zwischen Wulst 5 und Gürtel 2. Jedes Kernprofil 10 ist daher komplett vom Material des Verstärkungsprofils umhüllt, wobei die umhüllende Schicht eine im Wesentlichen konstante Dicke d zwischen 1,5 und 3 mm aufweist.

Die dargestellte Ausführungsform ist dabei eine bevorzugte Ausführungsform, das Kernprofil 10 kann auch derart ausgeführt sein, dass es über einen kürzeren oder längeren Teil der Erstreckung des Verstärkungsprofils 9 verläuft. Das Kernprofil 10 kann auch innerhalb des Verstärkungsprofils 9 in Richtung Gürtel 2 versetzt angeordnet sein.

Von besonderer Bedeutung ist, dass sich die Gummimischung der Verstärkungsprofile 9 und der Kemprofile 10 voneinander hinsichtlich der Härte unterscheiden. Das Verstärkungsprofil 9 besteht aus einer weicheren Mischung mit einer Shore-A-Härte von 60 bis 76, insbesondere 63 bis 66 Shore-A. Die elastomere Mischung, aus welcher das Kernprofil 10 hergestellt wird, weist eine Shore-A-Härte von 74 bis 82, insbesondere 78 bis 81 Shore-A auf. Der Elastizitätsmodul des Materials des Kernprofils 10 beträgt zwischen 8 und 12 N/mm², jener des Materials des Verstärkungsprofils 9 zwischen 2 und 9 N/mm². Die weicheren Verstärkungsprofile 9 schützen somit die härteren Kernprofile 10, die für die Selbsttragefähigkeit des Reifens im Pannenfall maßgeblich sind, vor Rissen und verbessern den Fahrkomfort.

In einem Fahrzeugluftreifen können erfindungsgemäß ausgeführte Verstärkungsprofile mit weiteren Verstärkungsprofilen kombiniert werden. Möglich ist auch eine andere Anordnung der Verstärkungsprofile als jene in Fig. 1 gezeigte, beispielsweise nicht an der Außen- sondern an der Innenseite der Karkasse 3.

Die Herstellung erfindungsgemäß ausgeführter Verstärkungsprofile kann mittels eines Duplex-Extruders erfolgen.

## Patentansprüche

1. Fahrzeugluftreifen in radialer Bauart mit einem profilierten Laufstreifen, einem mehrlagigen Gürtelverband, einer Innenschicht, einer zumindest einlagig ausgeführten Karkasse, welche um Wulstkerne in Wulstbereichen geführt ist, Seitenwänden und mit zumindest je einem im Bereich jeder Seitenwand eingebrachten, im Querschnitt mondsichelförmigen Verstärkungsprofil, welches sich jeweils zumindest über einen Großteil der Seitenwandlänge erstreckt und aus elastomeren Materialen verschiedener Härten besteht,
**dadurch gekennzeichnet,**
**dass** im Verstärkungsprofil (9) ein im Querschnitt ebenfalls mondsichelförmiges Kernprofil (10) aus einem gegenüber dem sonstigen Material des Verstärkungsprofils (9) härteren Material eingeschlossen ist.

2. Fahrzeugluftreifen nach Anspruch 1, **dadurch gekennzeichnet, dass** die Querschnittsform des Kernprofils (10) zumindest im Wesentlichen der Querschnittsform des Verstärkungsprofils (9) entspricht.

3. Fahrzeugluftreifen nach Anspruch 1 oder 2, **dadurch gekennzeichnet, dass** sich das Kernprofil (10) über zumindest 30 %, insbesondere bis zu 70%, der Erstreckung des Verstärkungsprofils (9) zwischen Gürtel (2) und Wulst (5) erstreckt.

4. Fahrzeugluftreifen nach einem der Ansprüche 1 bis 3, **dadurch gekennzeichnet, dass** die Shore-A-Härte des Verstärkungsprofils (9) zwischen 60 und 76, insbesondere zwischen 63 und 66, beträgt.

5. Fahrzeugluftreifen nach einem der Ansprüche 1 bis 3, **dadurch gekennzeichnet, dass** die Shore-A-Härte des Kernprofils (10) zwischen 74 und 82, insbesondere zwischen 78 und 81, beträgt.

6. Fahrzeugluftreifen nach einem der Ansprüche 1 bis 5, **dadurch gekennzeichnet, dass** der Elastizitätsmodul des Materials des Kemprofils (10) zwischen 8 und 12 N/mm² beträgt, jener des Materials des Verstärkungsprofils (9) zwischen 2 und 9 N/mm².

## Claims

1. Radial pneumatic tyre for a vehicle, comprising a profiled tread rubber, a multilayered belt assembly, an inner layer, an at least single-ply casing, which is taken around bead cores in bead regions, sidewalls and at least one cross-sectionally crescent-shaped reinforcing profile introduced in the region of each sidewall, respectively extending over at least a large part of the length of the sidewall and consisting of elastomer materials of different hardnesses, **characterized in that** a cross-sectionally likewise crescent-shaped core profile (10) of a material that is harder than the other material of the reinforcing profile (9) is enclosed in the reinforcing profile (9).

2. Pneumatic vehicle tyre according to Claim 1, **characterized in that** the cross-sectional shape of the core profile (10) corresponds at least substantially to the cross-sectional shape of the reinforcing profile (9).

3. Pneumatic vehicle tyre according to Claim 1 or 2, **characterized in that** the core profile (10) extends over at least 30%, in particular up to 70%, of the extent of the reinforcing profile (9) between the belt (2) and the bead (5).

4. Pneumatic vehicle tyre according to one of Claims 1 to 3, **characterized in that** the Shore A hardness of the reinforcing profile (9) is between 60 and 76, in particular between 63 and 66.

5. Pneumatic vehicle tyre according to one of Claims 1 to 3, **characterized in that** the Shore A hardness of the core profile (10) is between 74 and 82, in particular between 78 and 81.

6. Pneumatic vehicle tyre according to one of Claims 1 to 5, **characterized in that** the modulus of elasticity of the material of the core profile (10) is between 8 and 12 N/mm², that of the material of the reinforcing profile (9) between 2 and 9 N/mm².

## Revendications

1. Pneumatique de véhicule de construction radiale, comprenant une bande de roulement profilée, une bande d'armature multicouche, une couche interne, une carcasse de réalisation au moins monocouche, qui est guidée autour de noyaux de talon dans des régions de talon, des parois latérales et au moins un profilé de renforcement prévu dans la région de chaque paroi latérale, de section transversale en forme de croissant de lune, qui s'étend à chaque fois au moins sur une majeure partie de la longueur de la paroi latérale et qui se compose de matériaux élastomères de différentes duretés,
**caractérisé en ce que**
dans le profilé de renforcement (9) est incorporé un profilé de noyau (10) de section transversale également en forme de croissant de lune constitué d'un matériau plus dur que l'autre matériau du profilé de renforcement (9).

2. Pneumatique de véhicule selon la revendication 1, **caractérisé en ce que** la forme en section transversale du profilé de noyau (10) correspond au moins sensiblement à la forme en section transversale du profilé de renforcement (9).

3. Pneumatique de véhicule selon la revendication 1 ou 2, **caractérisé en ce que** le profilé de noyau (10) s'étend sur au moins 30%, notamment jusqu'à 70%, de l'étendue du profilé de renforcement (9) entre la bande (2) et le talon (5).

4. Pneumatique de véhicule selon l'une quelconque des revendications 1 à 3, **caractérisé en ce que** la dureté Shore-A du profilé de renforcement (9) est comprise entre 60 et 76, notamment entre 63 et 66.

5. Pneumatique de véhicule selon l'une quelconque des revendications 1 à 3, **caractérisé en ce que** la dureté Shore-A du profilé de noyau (10) est comprise entre 74 et 82, notamment entre 78 et 81.

6. Pneumatique de véhicule selon l'une quelconque des revendications 1 à 5, **caractérisé en ce que** le module d'élasticité du matériau du profilé de noyau (10) est de 8 à 12 N/mm², et celui du matériau du profilé de renforcement (9) est de 2 à 9 N/mm².
